# EUROPEAN PATENT APPLICATION

(11) **EP 1 593 862 A1**
(43) Date of publication of application: **09.11.2005**
(21) Application number: 04425320.1
(22) Date of filing: 06.05.2004
(51) Int. Cl.: F16B 12/26, F16B 21/06, A47B 96/02

(54) **Shelf adjustment device for intermediate shelves and bases of furniture**

(71) Applicant: Euromid S.r.l., 23868 Valmadrera (LC) (IT)
(72) Inventor: Isella, Eracchio Giuseppe, 23868 Valmadrera (IT)
(74) Representative: Colombo, Stefano Paolo

(57) **Abstract**

What is described is a shelf adjustment device for fitting intermediate shelves and bases of furniture. The shelf adjustment device comprises a bracket and a bush. The bush comprises a snap-locking member and the bracket comprises a socket to receive the snap-locking member when the bracket and the bush are coupled. According to the invention, the bracket comprises a stop to keep the snap-locking member out of the socket and to enable the bracket to be separated from the bush.

## Description

The present invention relates to the field of furniture, and in particular to the field of furniture which is at least partially modular. Even more particularly, the present invention relates to a shelf adjustment device which enables intermediate shelves and bases to be fixed in a practical, convenient and economical way.

Modular or partially modular furniture has been known for a considerable time. In the present description, the term "furniture" or "(partially) modular furniture" will be used to denote furniture consisting of at least two sides (positioned substantially vertically when in use) and at least one shelf (positioned substantially horizontally when in use) supported removably by the sides. Typically, there is a plurality of intermediate shelves in a piece of furniture. The same terms "furniture" and "(partially) modular furniture" also cover a piece of furniture having a lower base (substantially a shelf close to the ground), an upper base and possibly a back. The terms "surface" and "shelf' will be used interchangeably to denote the same component.

There are various known systems for attaching intermediate shelves to the sides of modular furniture. In the most common system, two parallel vertical rows of equally spaced holes are provided on each side. One L-shaped bracket is then fixed with a screw in the desired position for each row of holes. A total of four L-shaped brackets are therefore fixed at the same height to support a shelf. Meanwhile, bushes are fitted into the shelf, in positions corresponding to those of the brackets. Finally, the shelf is fitted by lowering it towards the brackets in such a way that the brackets are coupled to the bushes. The assembly comprising a bracket and a bush is referred to as a shelf adjustment device.

Various shelf adjustment devices are known. In particular, there is a known shelf adjustment device, marketed by the Technical Group, in which the bush is also provided with a metal pin which acts as a catch. The metal pin has slots for screwdrivers at both of its ends. In a first position, the pin does not interfere with the bracket, which can be fitted into a suitable bush in the shelf. When the bush and the bracket have been fitted together, the pin can be rotated into a second, locking position, in which it prevents the separation of the bush and the bracket.

This known shelf adjustment device provides a good fastening between a shelf and the sides. Additionally, the presence of the metal pin with screwdriver slots at both ends enables a base to be locked or unlocked (provided that an operating hole is formed on the opposite side of the shelf). However, the operation of this known shelf adjustment device is inconvenient, because it is necessary to use a screwdriver both to lock and to unlock the shelf. Moreover, a person carrying out the assembly has to remember to lock all the catches in order to fix the shelf, or to open them in order to release the shelf: an error could tear out the bracket and its screw, and irreparably damage the sides of the furniture.

Another drawback of the known shelf adjustment device is its high cost. This is due to the fact that the bush is made from plastic material while the pin is made from metal, and that the two parts must be assembled in a precise and complicated way which is difficult to automate.

There is also a known shelf adjustment device produced by the applicant. The applicant's known device comprises a bush, typically made from plastic material, with a snap catch integral with the said bush. When the brackets have been fixed to the sides and the bushes have been inserted into a shelf, the assembly operation is carried out simply by inserting the plastic bushes, since the catch slides along the bracket and is positioned under a horizontal notch in the latter, thus providing a secure lock. Disassembly is carried out by exerting a pressure on the catch in such a way that it is moved away from the bracket and is positioned behind two small stops, also formed in the bracket. The two small stops have the function of holding the fixed catch in tension in such a way that, when the bush is slid along the bracket for removal, this catch does not contact the notch, which would impede the disassembly.

A drawback of the known shelf adjustment device produced by the applicant is that it cannot be used to assemble bases of furniture; in other words, it cannot be operated from both faces of a shelf. Another drawback is that, in order to carry out a new operation of fitting a shelf, each catch has to be returned to the original position by disengaging it from the two stops, in such a way that it is again free to be engaged in the notch of the base.

In view of the drawbacks of the known shelf adjustment devices, the object of the present invention is to provide a shelf adjustment device in which it is not necessary to reposition a locking member in order to be able to carry out a new fitting operation.

A further object of the present invention is to provide a shelf adjustment device which can be used to fit both intermediate shelves and bases of furniture.

Yet another object of the present invention is to provide a shelf adjustment device which is economical to produce. In particular, a shelf adjustment device having a bush in one piece which does not have to be assembled with other components such as metal pins or the like.

These and other objects are achieved by the shelf adjustment device according to Claim 1, by a bracket according to Claim 11 and by a bush according to Claim 15. Further advantageous characteristics are stated in the corresponding dependent claims. All the claims are considered to be an integral part of the present description.

In a first aspect, the present invention provides a shelf adjustment device comprising a bracket and a bush, the bush comprising a snap-locking member and the bracket comprising a socket for receiving the snap-locking member when the bracket and the bush are coupled together, in which the bracket comprises a stop to keep the snap-locking member outside the socket and to enable the bracket to be separated from the bush.

Conveniently, the bracket comprises a projecting support with a hole, and the stop comprises a pair of protuberances projecting from opposite sides of this hole.

In one embodiment, each protuberance is formed with a stop wall and an inclined or curving connecting wall to connect the stop wall to the edges of the hole.

The bracket comprises a shank with the socket for the locking member. The surface of the socket is slightly inclined with respect to the projecting support.

In a preferred embodiment, the bush comprises an upper base with a through aperture. The bush also comprises a longitudinal partition which extends inside it from its upper base to its lower base, the upper end of the partition delimiting the through aperture of the upper base.

Conveniently, the locking member comprises a catch which extends into the bush and is inclined towards the longitudinal partition.

The longitudinal partition comprises an aperture.

In a second aspect, the invention provides a bracket for a shelf adjustment device for fixing intermediate shelves and bases of furniture, the bracket comprising a shank and a projecting support with a hole, and also comprising a stop for keeping a snap-locking member of a corresponding bush outside the seat and for enabling the bracket to be separated from the bush.

In a third aspect, the invention provides a bush for a shelf adjustment device comprising a bracket, the bush comprising a substantially cylindrical body with an upper base, a lower base and a snap-locking member, the upper base also comprising an aperture for moving the snap-locking member by means of a tool introduced into the upper base aperture.

The present invention will be clearly understood from the following detailed description, to be read with reference to the attached drawings, in which:
- Figure 1 is a first axonometric view of the bush according to the invention;
- Figure 2 is a second axonometric view of the bush according to the invention;
- Figure 3 is a lateral view of the bush according to the invention;
- Figure 4 is a plan view from above of the bush according to the invention;
- Figure 5 is a plan view from below of the bush according to the invention;
- Figure 6 is a first axonometric view of the bracket according to the invention;
- Figure 7 is a second axonometric view of the bracket according to the invention;
- Figure 8 is a lateral view of the bracket according to the invention;
- Figure 9 is a plan view from above of the bracket according to the invention; and
- Figure 10 is a plan view from below of the bracket according to the invention.

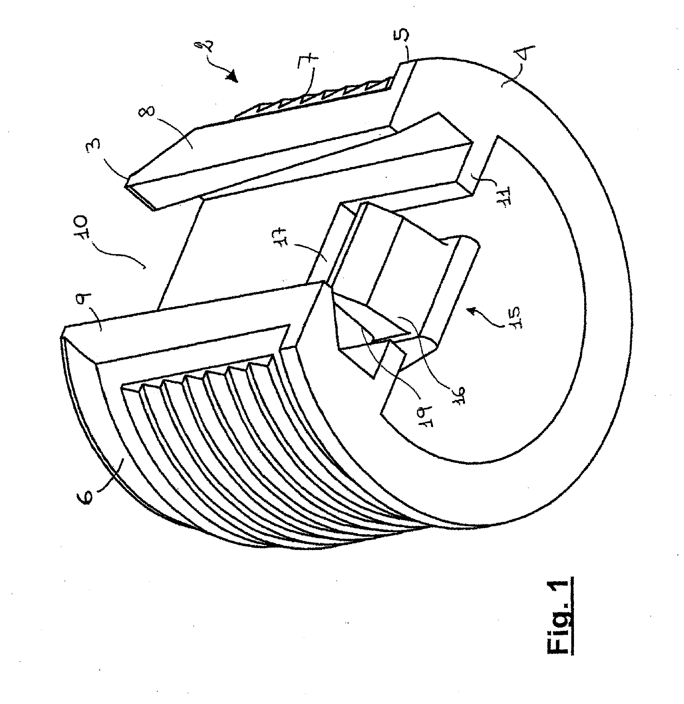

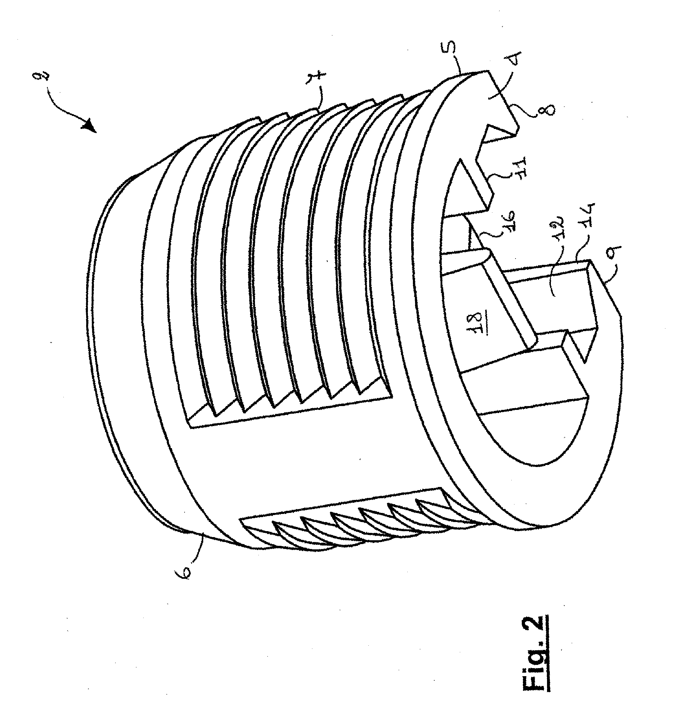

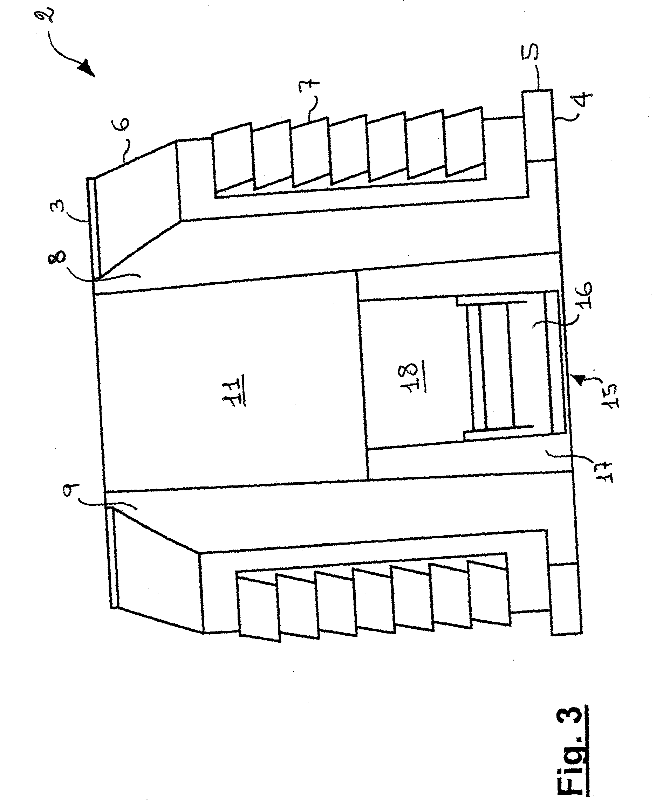

With reference to the various Figures 1 to 5, the bush 2 according to the invention comprises a substantially tubular cylindrical body delimited by an upper base 3 and a lower base 4. An outwardly projecting border 5 is formed in the proximity of the lower base 4, while the body is tapered in the proximity of the upper base 3 to form an insertion guide 6. The outer surface of the cylindrical body is at least partially formed with parallel toothing 7 in a fish-bone arrangement.

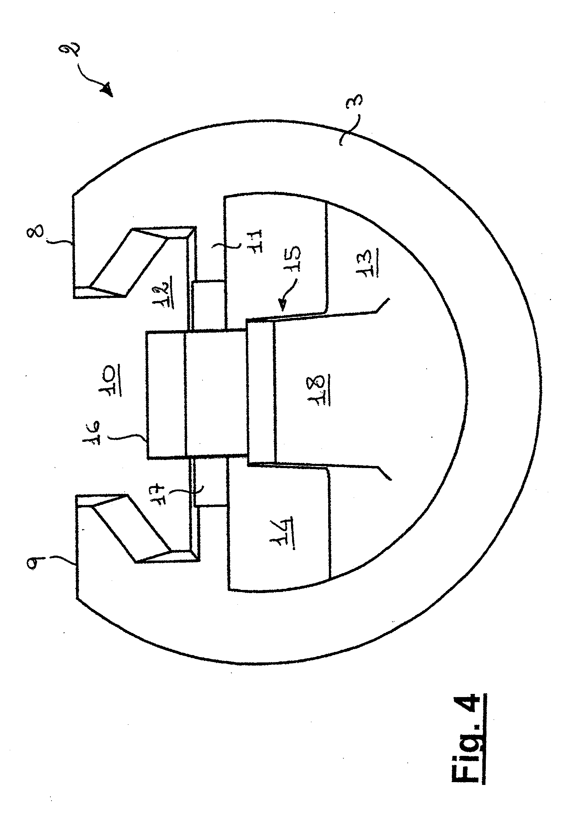

The body of the bush 2 is cut along a plane parallel to a diameter to form a first and a second flat sectional surface 8, 9. This creates an aperture 10. Inside the body of the bush 2 there is a longitudinal partition 11, substantially parallel to the first and second flat sectional surface 8, 9. Between the inner partition 11 and the sectional surfaces 8, 9 there is a channel 12 which extends over the whole length of the bush 2. The channel 12 is tapered towards the upper end 3, as will be understood clearly from a perusal of Figures 1 and 4. There is an opening 17 at the lower end of the longitudinal partition 11.

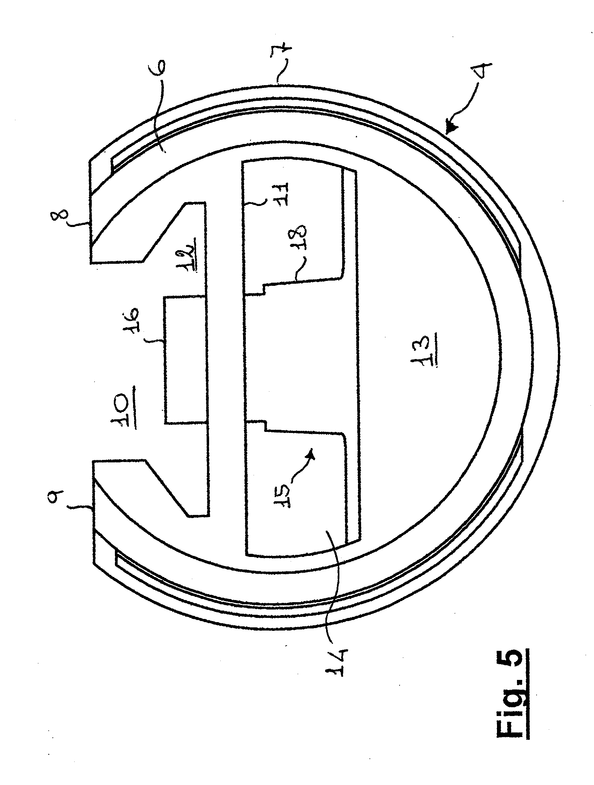

With reference to Figure 5 in particular, the upper base 3 of the bush 2 is partially closed by a surface 13 forming a portion of a circle, and by the partition 11. In addition to the aperture 10 and the channel 12, an upper base aperture 14 is formed between the partition 11 and the edge of the surface 13 forming a portion of a circle. A tool (such as a screwdriver) can be introduced through this upper base aperture 14 and through the whole length of the bush 2.

A locking member 15, preferably snap catch, extends from the edge of the surface 13 forming a portion of a circle. The catch 15 extends towards the lower surface 4, and is inclined towards the partition 11. The catch 15 substantially terminates in a tooth 16. When the bush 2 is not engaged with a bracket 22 (described below), the projecting end of the tooth 16 projects through the opening 17 of the partition and is located within the channel 12 as shown in Figure 5. When an elongate tool, for example a screwdriver, is introduced into the upper base aperture 14, the catch 15 can be forcibly straightened in such a way that the end of the tooth 16 is no longer located in the channel 12. In the illustrated embodiment, the catch 15 comprises a substantially rectangular tab 18 and the tooth 16 comprises an upper surface 19 substantially perpendicular to the tab 18.

Conveniently, the bush 2 according to the invention is made in a single piece by injection moulding of a plastics material, for example a nylon-based material.

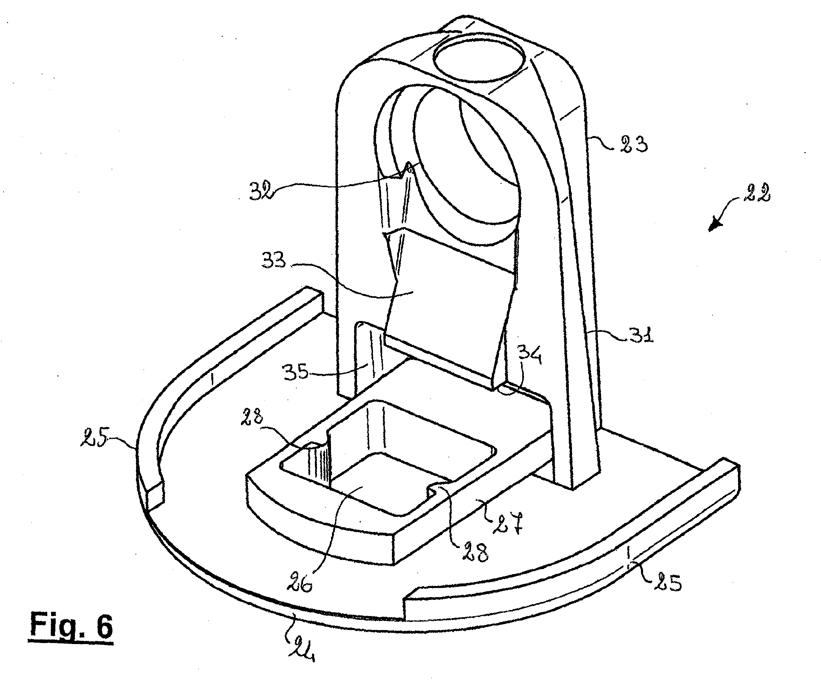

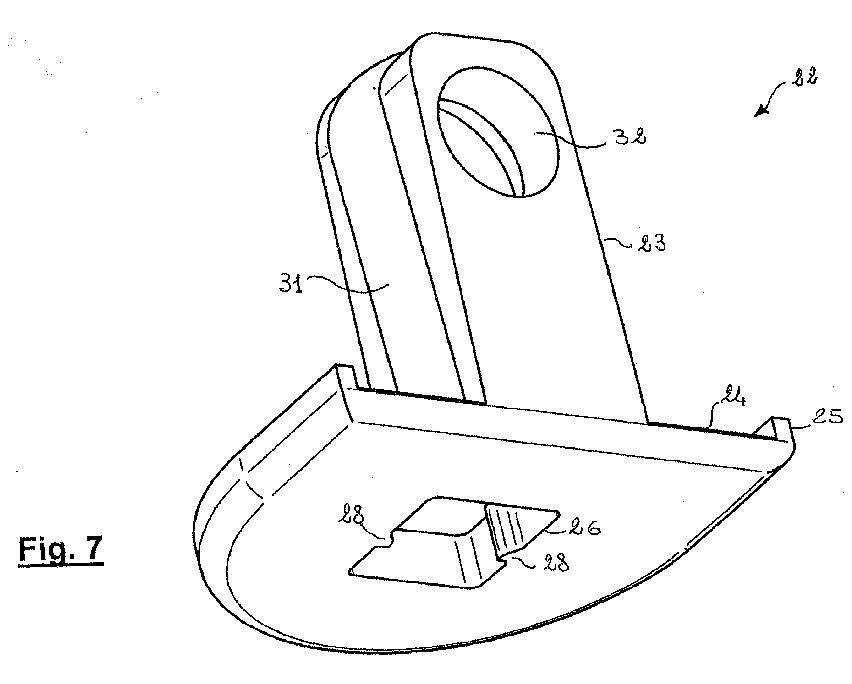

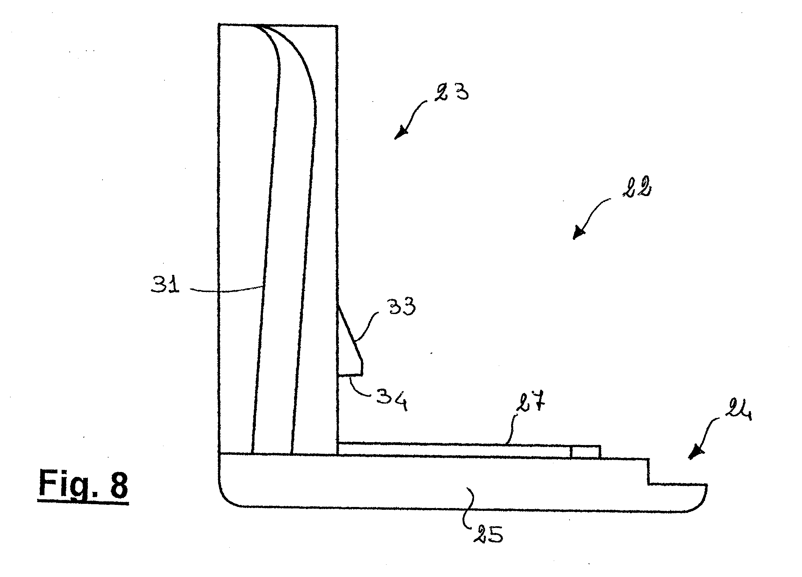

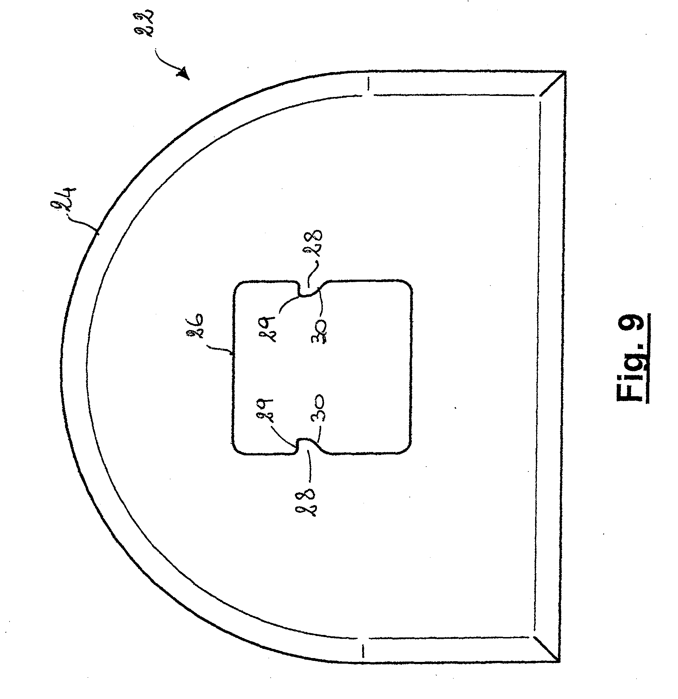

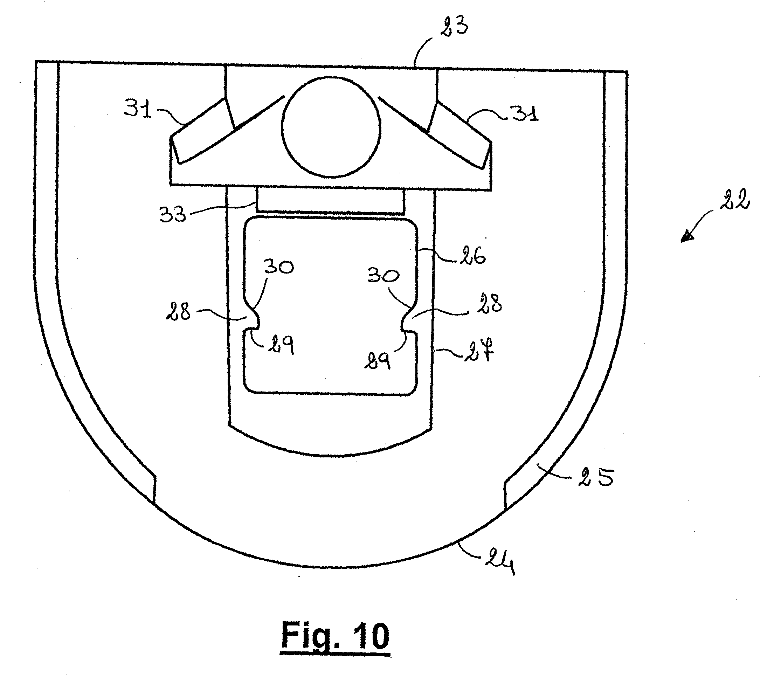

The bracket 22 according to the invention is described in detail below with reference to Figures 6 to 10. The bracket 22 comprises a shank 23 and a projecting support which substantially form an L-shape. The projecting support 24 is rounded in a substantially semicircular shape. Two opposite edge portions form a border 25 which extends upwards. A hole 26 with an edge 27 which also extends upwards is provided in a substantially central position of the projecting support.

The hole 26 in the projecting support is substantially rectangular. There is a pair of inwardly projecting protuberances 28 on two opposite sides of the said hole 26. Preferably, each protuberance 28 is formed with a stop wall 29 and an inclined or curved connecting wall 30 for connecting the stop wall 29 to the edges of the hole 26. As explained below, the protuberances 28 form a stop to keep the snap-locking member (the catch 15) out of the seat and to enable the bracket 22 to be separated from the bush 2.

The shank 23 of the bracket 22 is substantially parallelepipedal with a rounded free upper edge. Two guides 31, tapered towards the projecting support 24, are formed along the sides of the shank 23. At the free end there is a circular through hole 32 for receiving a fixing screw (not shown) for fixing the bracket to the side of a piece of furniture.

Under the hole 32 in the shank 23 there is an outwardly inclined slide 33 which terminates in a lower surface 34. The said surface 34 under the slide is substantially horizontal. Preferably, the said surface 34 is slightly inclined with respect to the horizontal in such a way that the angle between it and the slide 33 is greater than would be the case if the lower surface 34 were horizontal.

A recess is created between the lower surface 34 and the edge of the hole 26 in the projecting support to form a seat 35 for the tooth 16 of the catch 15.

The bracket 22 according to the invention is preferably made from metallic material, more preferably from "Zama". In another embodiment it is made from a plastics material.

The fitting of an intermediate shelf (not shown) to two sides of a piece of furniture will now be described. First of all, as usual, two brackets 22 are fixed to each side, at the same height and in predetermined positions. Four bushes 2 are also fitted into corresponding holes formed on the lower face of the shelf. The shelf is then lowered from above in such a way that the guides of the shank 23 of each bracket 22 fit into the channel 12 of each bush 2. Thus the snap catch 15 is stressed elastically by the contact between its tooth 16 and the slide 33 of the shank. Because of the weight of the shelf itself, or when the shelf is pushed farther down, the tooth 16 of each catch 15 enters the seat 35 formed in the shank of the corresponding bracket 22 and thus locks the intermediate shelf to the sides.

To detach an intermediate shelf from two sides to which it is fixed, pressure is exerted to bring the catch 15 up to the stop walls 29 of the protuberances 28. In other words, the end of the catch 15 is forced by a tool (typically a screwdriver) to slide against the connecting walls 30 of the protuberances 28 and bear on the stop walls 29. In this position, the teeth 16 of the catches 15 emerge from their seats and allow the brackets 22 and the bushes 2 to be separated from each other when the shelf is lifted. It will be understood that, when the shelf has been lifted slightly from the brackets 22, the catches 15 of the bushes return automatically to their original positions and are ready for another assembly operation. In other words, it is not necessary to prepare the catch 15 in a suitable way in order for it to be ready to snap into place and lock the bush 2 to the bracket 22.

The shelf adjustment device according to the invention is also conveniently capable of being used for fitting and detaching bases of furniture (not shown) and not only intermediate shelves. The term "base" substantially denotes a shelf fitted in such a low position that there is no room to use a screwdriver below it. To fit a base on a piece of furniture, in addition to what is done for the intermediate shelves, a hole is made from above, in line with the aperture of the upper base of each bush.

The base is fitted substantially in the same way as an intermediate shelf. To detach the base, an elongate tool, for example a screwdriver, is introduced into the hole in the base of the furniture, so that it penetrates into the upper base aperture 14 of the bush 2. Thus the catch 15 is straightened and locked, being brought against the stop walls 29 of the protuberances 28. With the catch in this position, the base of the furniture can be lifted. As for the intermediate shelves, a slight lifting of the base allows the catches 15 to snap back into place, ready for engagement with other brackets.

## Claims

1. Shelf adjustment device comprising a bracket (22) and a bush (2), the said bush (2) comprising a snap-locking member (15, 16, 19) and the said bracket (22) comprising a socket (35) to receive the said snap-locking member (15, 16, 19) when the said bracket (22) and the said bush (2) are coupled, **characterized in that** the said bracket (22) comprises a stop (28, 29) to keep the snap-locking member (15) outside the socket (35) and to enable the bracket (22) to be separated from the bush (2).

2. Shelf adjustment device according to Claim 1, **characterized in that** the said bracket (22) comprises a projecting support (24) with a hole (26) and the said stop (28, 29) comprises a pair of protuberances (28) projecting from opposite sides of the said hole (26).

3. Shelf adjustment device according to Claim 2, **characterized in that** each protuberance (28) is formed with a stop wall (29) and an inclined or curved connecting wall (30) to connect the stop wall (29) to the edges of the hole (26).

4. Shelf adjustment device according to Claim 2 or 3, **characterized in that** the projecting support is thickened in the area of the said hole (26).

5. Shelf adjustment device according to any one of the preceding claims, **characterized in that** the said bracket (22) comprises a shank (23) with the socket (35) for the locking member (15, 16), the said socket (35) having a surface slightly inclined with respect to the projecting support (24).

6. Shelf adjustment device according to any one of the preceding claims, **characterized in that** the said bush (2) comprises an upper base (3) with a through aperture (14).

7. Shelf adjustment device according to Claim 6, **characterized in that** the said bush (2) comprises a longitudinal partition (11) which extends inside it from its upper base (3) to its lower base (4), the upper end of the said partition (11) delimiting the said through aperture (14) of the upper base.

8. Shelf adjustment device according to any one of the preceding claims, **characterized in that** the said locking member (15, 16) comprises a catch (15) which extends inside the said bush (2) towards a longitudinal partition (11).

9. Shelf adjustment device according to Claim 8, **characterized in that** the said catch (15) comprises a tooth (16).

10. Shelf adjustment device according to Claim 7 or 8, **characterized in that** the said longitudinal partition (11) comprises an opening (17).

11. Bracket (22) for a shelf adjustment device comprising a bush (2) for fixing intermediate shelves and bases of furniture, the said bracket comprising a shank (23) and a projecting support with a hole (26), **characterized in that** it also comprises a stop (28, 29) to keep a snap-locking member (15, 16) of the bush out of the socket (35) and to enable the bracket (22) to be separated from the bush (2).

12. Bracket according to Claim 11, **characterized in that** the said stop (28, 29) comprises a pair of protuberances (28) projecting from opposite sides of the said hole (26).

13. Bracket according to Claim 12, **characterized in that** each protuberance (28) is formed with a stop wall (29) and an inclined or curved connecting wall (30) to connect the stop wall (29) to the edges of the hole (26).

14. Bracket according to Claim 11, 12 or 13, **characterized in that** it comprises a shank (23) with a socket (35) for the locking member (15, 16), the said socket (35) having a surface slightly inclined with respect to the projecting support (24).

15. Bush (2) for a shelf adjustment device comprising a bracket (22), the said bush comprising a substantially cylindrical body with an upper base (3), a lower base (4) and a snap-locking member (15), **characterized in that** the said upper base (3) comprises an aperture (14) for the movement of the said snap-locking member (15) by means of a tool introduced into the said upper base aperture.

16. Bush (2) according to Claim 15, **characterized in that** it comprises a longitudinal partition (11) which extends inside it from its upper base (3) to its lower base (4), the upper end of the said partition (11) delimiting the said through aperture (14) of the upper base.

17. Bush (2) according to Claim 15 or 16, **characterized in that** the said locking member (15, 16) comprises a catch (15) which extends inside the said bush (2) towards a longitudinal partition (11).

18. Bush (2) according to Claim 17, **characterized in that** the said catch comprises a tooth (16).

19. Bush (2) according to Claim 16 or 17, **characterized in that** the said longitudinal partition comprises an opening (17).
